(19) **Europäisches Patentamt**

**European Patent Office**

**Office européen des brevets**

(11) **EP 0 778 470 B1**

(12) **FASCICULE DE BREVET EUROPEEN**

(45) Date de publication et mention
de la délivrance du brevet:
**22.05.2002 Bulletin 2002/21**

(51) Int Cl.7: **G01S 7/292**, G01S 13/72

(21) Numéro de dépôt: **96402597.7**

(22) Date de dépôt: **29.11.1996**

(54) **Système et procédé de régulation du nombre de plots à traiter dans un radar**

Anordnung und Verfahren zur Regelung der Anzahl der zu behandelnden Zielmeldungen in einem Radarsystem

Device and method for regulating the number of plots which are to be treated in a radar system

(84) Etats contractants désignés:
**DE FR GB IT**

(30) Priorité: **05.12.1995 FR 9514339**

(43) Date de publication de la demande:
**11.06.1997 Bulletin 1997/24**

(73) Titulaire: **Thales**
**75008 Paris (FR)**

(72) Inventeur: **Brethes, Alain, Thomson CSF, SCPI**
**94117 Arcueil Cedex (FR)**

(74) Mandataire: **Benoit, Monique**
**Thomson-CSF Propriété Intellectuelle,**
**13, Avenue du Président Salvador Allende**
**94117 Arcueil Cédex (FR)**

(56) Documents cités:
**EP-A- 0 050 886**     **EP-A- 0 054 646**
**EP-A- 0 364 333**     **EP-A- 0 425 356**
**US-A- 5 202 691**

- **IEEE TRANSACTIONS ON AEROSPACE AND ELECTRONIC SYSTEMS, vol. 30, no. 1, 1 Janvier 1994, pages 281-287, XP000423953 "APPLICATION OF NEURAL NETWORKS IN TARGET TRACKING DATA FUSION"**

**Description**

L'invention concerne les radars et, plus particulièrement dans un radar, un système et un procédé pour réguler le nombre de plots à traiter dans une situation radar comportant un grand nombre de plots.

Les radars de surveillance aérienne détectent, en réponse à des impulsions émises, des échos qui peuvent correspondre à des aéronefs ou cibles et les présentent à l'opérateur radar sous la forme de points ou plots sur une carte en coordonnées azimut-distance par rapport à un centre qui est, par exemple, matérialisé par la tour de contrôle d'un aéroport. D'un tour d'antenne radar au suivant, les plots se déplacent sur la carte et les plots successifs définissent une piste. Pour des raisons évidentes de capacité de traitement, le nombre de plots que peut traiter simultanément un radar est limité de sorte que si ce nombre est dépassé, de nouveaux échos ne seront pas pris en compte et il en résultera une perte de détection qui est préjudiciable à la sécurité.

Il existe d'autres dispositifs de régulation de plots tels que ceux présentés dans les demandes de brevets EP-A-0 364 333 (THOMSON-CSF) et EP-A-0 054 646 (SIEMENS).

Pour pallier ce problème, il a été proposé d'effectuer une régulation non pas en nombre mais suivant un critère de risque. La mise en oeuvre d'un tel critère conduit à des traitements informatiques importants qui en ont limité l'application.

Un but de la présente invention est donc de réaliser un système et de mettre en oeuvre un procédé pour réguler le nombre de plots à traiter dans un radar en fonction d'un critère de risque qui ne présente pas les inconvénients des systèmes et procédés antérieurs, notamment en ce qui concerne les limitations liées à la charge des traitements informatiques.

Les systèmes de régulation actuels ne permettent pas de traiter différemment les différentes zones constituant une situation radar, c'est-à-dire que la régulation ou la limitation ne fait pas de distinction entre les différentes zones et appliquent un critère uniforme pour traiter les zones.

Un autre but de la présente invention est aussi de réaliser un système et de mettre en oeuvre un procédé pour réguler le nombre de plots à traiter dans un radar en tenant compte des spécificités des zones constituant la situation radar.

L'invention concerne un système de régulation du nombre de plots à traiter par un dispositif de pistage des plots d'un radar qui est connecté entre un dispositif pour extraire à chaque tour d'antenne du radar les coordonnées des plots ainsi que leurs caractéristiques et un dispositif pour visualiser les plots successifs extraits au cours de plusieurs tours d'antenne du radar, ledit système de régulation étant caractérisé en ce qu'il comprend :

- un dispositif de calcul de la valeur du risque de chaque plot selon une loi de risque déterminée qui est une fonction des caractéristiques du plot considéré, et

- un dispositif de filtrage des plots pour transmettre au dispositif de pistage les plots correspondant à des pistes établies au cours des précédents tours d'antenne du radar ainsi que les nouveaux plots dont la valeur du risque est inférieure ou égale à une valeur de régulation.

L'invention concerne également un procédé de régulation du nombre de plots à traiter par un dispositif de pistage des plots d'un radar, lesdits plots étant définis par leurs coordonnées par rapport à l'antenne du radar et par une pluralité de caractéristiques caractérisé en ce qu'il comprend les étapes suivantes :

(a) affecter à chaque plot une valeur $r_i$ du risque d'être un faux plot en fonction de tout ou partie des caractéristiques dudit plot,

(b) trier les plots pour transmettre les plots qui ont des coordonnées correspondant à des pistes établies,

(c) déterminer une valeur $R_i$ de régulation qui correspond à un risque acceptable que le plot soit un faux plot,

(d) comparer les valeurs $r_i$ de risque des plots non transmis à une valeur $R_i$ de régulation correspondant à un risque acceptable d'être un faux plot, et

(e) transmettre au dispositif de pistage les plots qui ont une valeur $r_i$ du risque inférieure ou égale à ladite valeur $R_i$ de régulation.

D'autres caractéristiques et avantages de la présente invention apparaîtront à la lecture de la description suivante d'un exemple particulier de réalisation, ladite description étant faite en relation avec les dessins ci-joints dans lesquels :

- la figure 1 est un schéma fonctionnel d'un radar incorporant un système de régulation du nombre de plots à traiter selon l'invention,
- la figure 2 est un schéma fonctionnel du système de régulation du nombre de plots à traiter selon l'invention,
- la figure 3 est un schéma montrant les moyens et le procédé à mettre en oeuvre pour déterminer une loi de risque appropriée,
- la figure 4 est un schéma fonctionnel montrant les moyens et le procédé pour déterminer le risque de régulation à retenir,
- la figure 5 est une courbe indiquant la probabilité $P_{fv}$ de faux plots mal classés en fonction de la probabilité $P_{vv}$ de vrais plots bien classés, et
- les figurés 6 et 7 sont des courbes de régulation qui permettent de calculer le nombre moyen de faux plots acceptés en aval de la régulation.

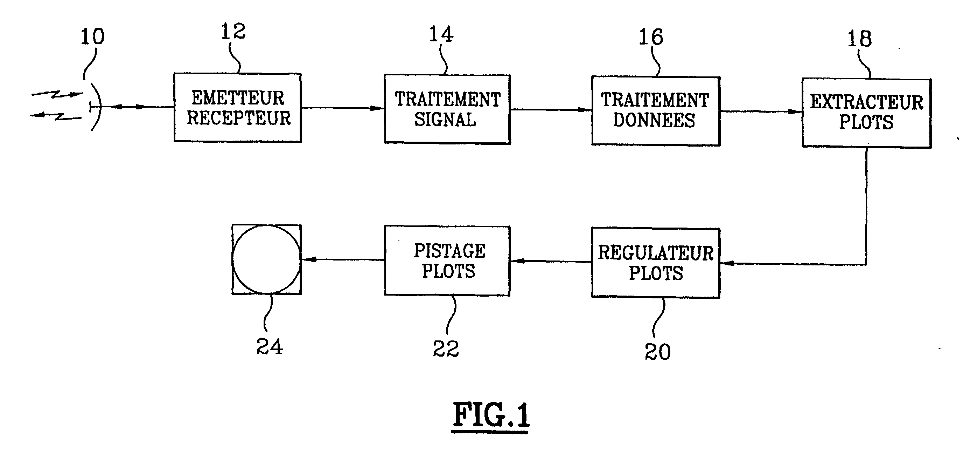

Un radar de surveillance aérienne avec un système de régulation du nombre de plots à traiter comprend schématiquement, selon la figure 1, un émetteur-récepteur 12 associé à une antenne d'émission-réception 10. En réponse aux signaux d'émission via l'émetteur et l'antenne, le radar reçoit des signaux qui sont détectés via l'antenne et le récepteur où ils sont amplifiés.

De manière classique, l'amplification des signaux s'effectue à fréquence intermédiaire et les signaux ainsi amplifiés sont, à la sortie du récepteur, démodulés pour produire des signaux vidéo. Dans les radars modernes, les signaux vidéo sont codés en nombres binaires pour être traités par des moyens informatiques, d'abord dans un dispositif de traitement du signal 14 et ensuite dans un dispositif de traitement des données 16.

A la sortie du dispositif de traitement 16, les données sont contenues dans une mémoire qui contient les informations relatives aux échos détectés au cours des périodes successives de récurrence correspondant à au moins un tour d'antenne, c'est-à-dire des informations indiquant la présence d'échos dans la zone de surveillance du radar.

Ces informations d'échos sont analysées par un dispositif extracteur 18 pour déterminer la présence d'une cible ou plot si plusieurs échos sont reconnus à une même position, un plot étant défini par un code numérique qui indique la position de la cible ainsi que d'autres caractéristiques ou attributs telles que le nombre d'échos pour le plot considéré, l'amplitude d'un ou plusieurs échos de la cible, la fréquence Doppler, etc ....

Pour connaître l'évolution des cibles au cours de plusieurs tours d'antenne, il est nécessaire de traiter les plots pour les corréler entre eux et les présenter sur un écran 24 où ils apparaissent sous forme de pistes. A cet effet, les informations de plots relatifs à un tour d'antenne sont traitées dans un dispositif de pistage 22 après avoir été "filtrées" dans un dispositif régulateur 20 qui a pour but de réguler le nombre de plots à traiter simultanément de manière à présenter sur l'écran 24 une image de situation radar aussi claire que possible en évitant, d'une part, la présence de faux plots et, d'autre part, la mise à l'écart de vrais plots.

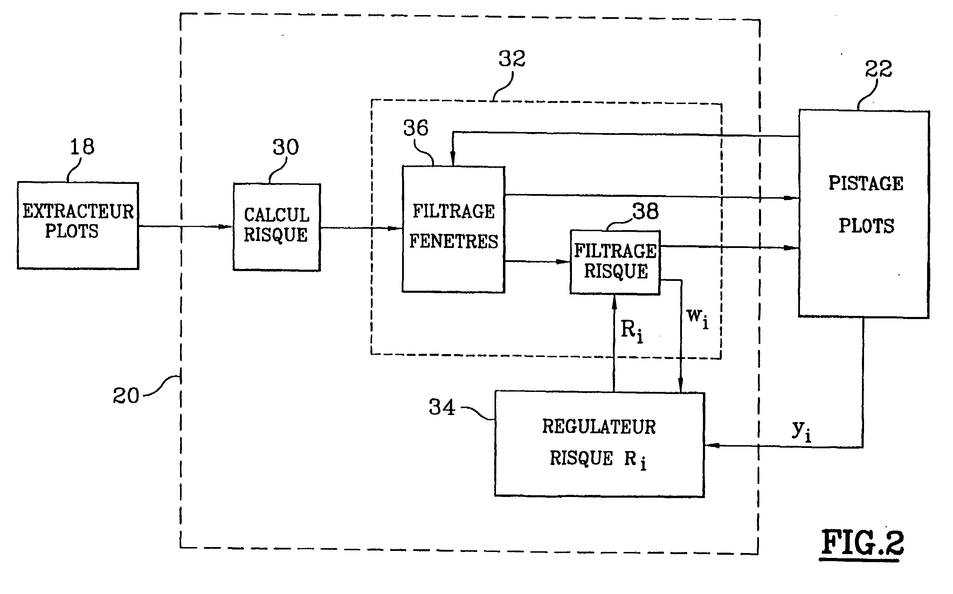

Comme on l'a indiqué dans le préambule, les dispositifs de régulation connus sont généralement du type à limitation par le nombre total de plots. Le dispositif de régulation selon l'invention est basé sur l'analyse du risque r que présente chaque plot d'être un faux plot de manière à présenter un nombre maximum de vrais plots tout en limitant le nombre de faux plots. Il comprend, comme le montre la figure 2, un dispositif de calcul du risque r de chaque plot 30, un dispositif de filtrage 32 des plots et un dispositif de calcul du risque de régulation R à retenir 34.

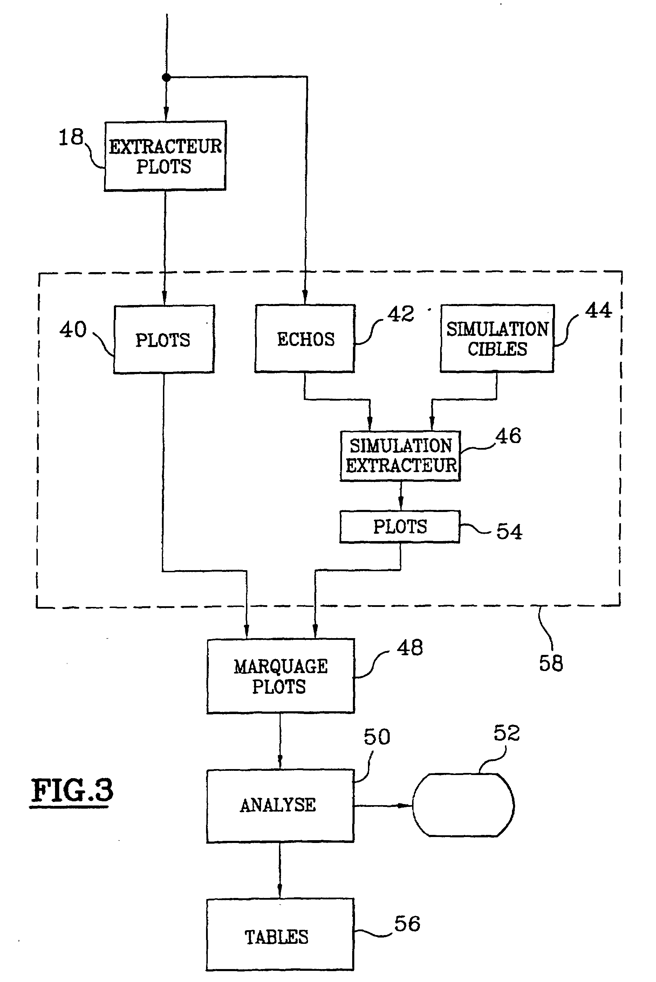

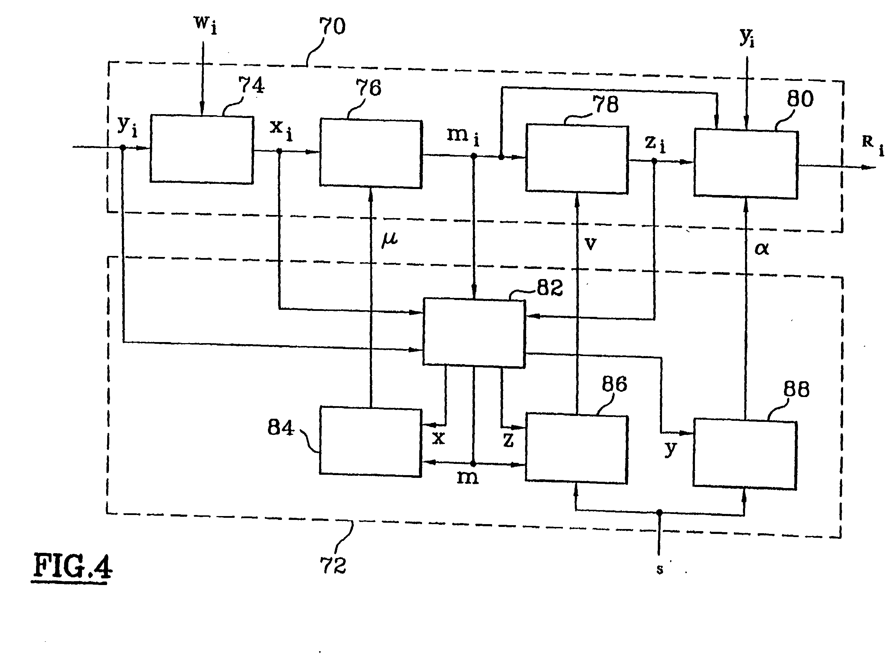

Le dispositif de calcul 30 du risque r affecté à chaque plot sera décrit en relation avec le schéma de la figure 3 tandis que le dispositif de calcul du risque de régulation R à retenir 34 sera décrit en relation avec la figure 4.

En ce qui concerne le dispositif de filtrage des plots 32, il comprend un premier dispositif de filtrage des plots en fonction de leur corrélation avec ceux des pistes existantes (circuit 36) et un deuxième dispositif de filtrage des plots non corrélés avec une piste existante en fonction du risque retenu (circuit 38). Par ce filtrage à deux niveaux, les vrais plots correspondant à des pistes existantes sont transmis au dispositif de pistage 22 tandis que les autres plots sont analysés pour ne transmettre au dispositif de pistage 22 que ceux qui présentent un risque r d'être un faux plot aussi faible que possible.

Pour réaliser le premier filtrage, le dispositif de pistage 22 fournit au circuit 36 les coordonnées des fenêtres de position dans lesquelles peut se trouver le plot suivant de la piste existante. Ce premier filtrage consiste essentiellement à comparer dans un comparateur (non représenté) les coordonnées du plot avec celles des fenêtres des plots existants. Pour le deuxième filtrage, la valeur du risque de régulation R qui est acceptable est fournie par le dispositif 34. Ce deuxième filtrage consiste à comparer dans un comparateur (non représenté) la valeur r du plot à la valeur R du risque de régulation R qui est acceptable.

Le dispositif de calcul du risque 30 est essentiellement constitué d'une mémoire qui, pour chaque combinaison de caractéristiques d'un plot, indique un niveau r de risque à affecter au plot.

La détermination du contenu d'une telle mémoire et son obtention seront expliquées en relation avec le schéma de la figure 3. Comme on l'a indiqué en relation avec la figure 1, le dispositif extracteur de plots 18 analyse les signaux radar correspondant à un tour d'antenne du radar pour déterminer si plusieurs échos successifs provenant d'un même endroit correspondent à une même cible. Si les critères d'analyse sont remplis, le dispositif extracteur 18 fournit un code numérique qui indique la position du plot, par exemple en azimut-distance par rapport à l'antenne, ainsi que d'autres caractéristiques ou attributs qui peuvent être, non limitativement :

1. le nombre d'échos reçus de la cible,
2. l'amplitude de l'écho le plus grand reçu de la cible,
3. la fréquence du filtre Doppler qui a fourni le signal le plus grand,
4. l'extension en azimut du plot,
5. la date du plot, par exemple le rang q du tour d'antenne,
6. l'extension en distance du plot,
7. l'énergie du plot,
8. la qualité en azimut du plot,
9. la qualité en site du plot,
10. la qualité en distance du plot, ....

Chacune de ces caractéristiques est codée par des mots binaires à un ou plusieurs chiffres selon l'échelle retenue pour le codage et il en résulte un code en plus des codes de coordonnées azimut-distance.

A titre d'exemple, la description sera faite en prenant, outre les coordonnées azimut-distance, les caractéristiques 1 à 5. Les informations (codes numériques C à n chiffres) relatives aux différents plots qui ont été reconnus au cours d'un tour d'antenne sont enregistrées dans une mémoire (non représentée) du dispositif extracteur 18. Ces informations sont enregistrées au fur et à mesure dans une mémoire 40 qui peut contenir les informations relatives à un grand nombre de tours d'antenne-radar de manière à connaître l'historique des plots des différentes cibles, par exemple, sur un heure de fonctionnement.

Les informations contenues dans la mémoire 40 sont utilisées dans un dispositif de marquage 48 pour affecter à chaque plot une étiquette (O ou 1) indiquant qu'il s'agit d'un faux plot ou d'un vrai plot selon qu'il peut être corrélé avec un plot précédent et/ou un plot suivant.

Les plots ainsi marqués vrais ou faux sont analysés par des logiciels d'analyse statistique dans un dispositif 50 de manière à affecter une valeur de risque r selon une échelle déterminée, par exemple à 256 niveaux, soit un code à k = 8 chiffres, pour les différents codes C des caractéristiques.

Une telle analyse qui ne tient compte que des plots correspondant à des plots d'une situation réelle est incomplète car cette situation réelle correspond à un intervalle de temps limité d'une heure et à des cibles courantes, ce qui exclut les cibles particulières telles qu'un missile, des leurres, etc ... .

Aussi pour enrichir les données auxquelles seront appliqués les logiciels d'analyse statistique, l'invention prévoit la simulation de plots à partir des informations relatives à des échos simulés qui sont fournies par un dispositif de simulation d'échos de cibles 44. Ces informations d'échos de cibles simulés sont appliquées à un dispositif de simulation d'extraction de plots 46 qui simule le dispositif extracteur 18. Pour vérifier le bon fonctionnement du simulateur 46, l'invention prévoit de lui appliquer les informations relatives aux échos réels et, à cet effet, les informations sont enregistrées dans une mémoire 42 qui peut contenir toutes les informations des échos réels pendant un nombre important de tours d'antenne, par exemple pendant une heure de fonctionnement.

Les informations relatives aux caractéristiques des plots simulés sont enregistrées dans une mémoire 54 analogue à la mémoire 40 dans laquelle sont enregistrées les caractéristiques des plots réels. Les caractéristiques des plots simulés sont ensuite traités de manière identique à celles des plots réels dans les dispositifs 48 et 50. Plus précisément, les caractéristiques des plots réels et des plots simulés sont traités simultanément pour en effectuer le marquage dans le dispositif de marquage 48 et l'analyse statistique dans le dispositif 50. Un dispositif de visualisation 52 permet d'afficher divers éléments de l'analyse des caractéristiques et du calcul des lois de risque qui peuvent être mises en oeuvre.

Les résultats des analyses et des calculs effectués par le dispositif 50 peuvent se présenter sous la forme d'une mémoire 56 qui comprend $2^n$ cases, chaque case contenant un nombre à k chiffres indiquant la valeur r du risque. La lecture de cette mémoire par le code C à n chiffres donne la valeur du risque r correspondant au code C des caractéristiques retenues. Cette mémoire 56 constitue l'élément principal du dispositif de calcul de risque 30 du schéma de la figure 2.

Les différentes opérations qui ont été décrites en relation avec la figure 3 sont réalisées par un calculateur avec des logiciels appropriés et connus qui sont utilisés de manière classique par les statisticiens et informaticiens.

De manière plus précise, ces logiciels mettent en oeuvre des classifieurs classiques et des classifieurs neuronaux et comprennent :

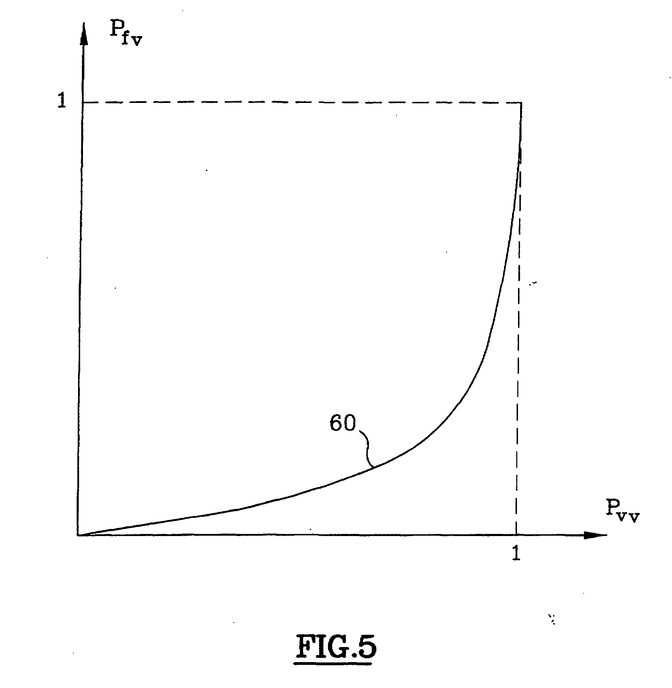

- des logiciels de pré-traitement pour sélectionner et transformer les caractéristiques ou attributs en changeant d'échelle, en analysant les composantes principales et en effectuant une analyse discriminante dite de FISHER,
- des logiciels d'algorithmes de discrimination avec estimation des lois de probabilité, notamment par discrimination linéaire et non-linéaire, par une rétropropagation du gradient sur un réseau neuronal,
- des logiciels de post-traitement pour optimiser le classement en fonction des contraintes et présenter le risque sous une forme permettant une bonne régulation,
- des logiciels de représentation graphique pour la représentation des données, par exemple la projection sur les axes principaux pour obtenir des histogrammes, et la représentation des résultats, par exemple par une courbe 60 telle que celle représentée sur la figure 5.

Cette courbe 60 donne la variation de la probabilité $P_{fv}$ d'avoir de faux plots mal classés (reconnus comme vrais) en fonction de la probabilité $P_{vv}$ d'avoir de vrais plots bien classés (reconnus comme vrais). Pour chaque loi de risque qui est mise en oeuvre, on obtient une courbe semblable à la courbe 60 qui est appelée courbe COR pour l'acronyme anglo-saxon "Characteristic Operating Rate".

Les opérations décrites en relation avec la figure 3 permettent de déterminer plusieurs lois de risque, chacune étant adaptée à une situation radar déterminée, par exemple en fonction du radar lui-même, de son mode de fonctionnement, du type de cibles, de la position des cibles par rapport au radar, par exemple de la position de la cellule azimut-distance considérée.

En pratique, chaque loi de risque qui sera retenue pour le radar considéré sera matérialisée par une table de correspondance entre le code C des attributs du plot et le risque r correspondant à ce code C. Autrement dit, le calcul du risque à affecter à un plot fera appel à une pluralité de tables de correspondance.

La valeur r du risque du plot étant ainsi déterminée, le filtrage dans le dispositif 38 s'effectuera en comparant cette valeur r à une valeur de référence R fournie par le dispositif de régulation 34 qui sera maintenant décrit en relation avec la figure 4.

La figure 4 est un diagramme montrant les différentes opérations qui sont effectuées par le dispositif de régulation 34 pour fournir la valeur de référence R, R étant la valeur maximale acceptable du risque d'avoir un faux plot, ce qui signifie que le plot est transmis au dispositif de pistage 22 si $r \leq R$ et n'est pas transmis dans le cas contraire $r > R$.

Dans ces opérations, certaines ne concernent que les cellules azimut-distance (rectangle en pointillé 70) tandis que les autres ne concernent que la situation radar correspondant à un tour d'antenne (rectangle en pointillé 72). Dans la suite de la description, l'indice i identifiera le rang de la cellule azimut-distance parmi N cellules.

Dans la suite de la description, les notations sont les suivantes :

- $x_i$ est le nombre de faux plots de la cellule de rang i en amont de la régulation,
- $y_i$ est le nombre de faux plots de la cellule de rang i en aval de la régulation, c'est-à-dire le nombre de plots rejetés par le dispositif de pistage 22,
- $w_i$ est le nombre de faux plots rejetés par le dispositif de filtrage 38, c'est-à-dire le nombre de plots pour lesquels $r_i > R_i$,
- $m_i$ est le nombre moyen de faux plots de la cellule de rang i en amont de la régulation,
- $z_i$ est le nombre moyen de faux plots de la cellule de rang i acceptés en aval de la régulation,
- $u_i$ est la probabilité de transmission de faux plots de la cellule de rang i,
- $P_i$ est la probabilité de transmission de vrais plots,
- s est le nombre moyen de faux plots tolérés pour un tour d'antenne,
- $x = \Sigma x_i$ est le nombre total de faux plots en amont de la régulation pour un tour d'antenne,
- $y = \Sigma y_i$ est le nombre total de faux plots en aval de la régulation pour un tour d'antenne,
- $m = \Sigma m_i$ est le nombre moyen total de faux plots en amont de la régulation,
- $z = \Sigma z_i$ est le nombre moyen total de faux plots en aval de la régulation pour un tour d'antenne.

Au niveau du traitement des cellules, une première opération 74 consiste à déterminer le nombre de faux plots $x_i$ en amont de la régulation et qui est la somme du nombre $w_i$ de faux plots rejetés par le dispositif de filtrage 38 et du nombre de faux plots $y_i$ rejetés par le dispositif de pistage 22.

Une deuxième opération 76 consiste à mettre à jour le nombre moyen $m_i$ de faux plots en tenant compte, d'une part, du nombre $x_i$ du tour d'antenne q et, d'autre part, du nombre $m_i$ du tour d'antenne précédent (q-1), par exemple par un filtrage défini par la relation :

$$m_{iq} = m_{i(q-1)} + \mu \ (x_{iq} - m_{i(q-1)}).$$

Le gain $\mu$ est mis au jour (rectangle 84) à chaque tour d'antenne en fonction du gain $\mu_{q-1}$ du tour d'antenne précédent et de l'écart (x-m). Ce gain $\mu$ doit être faible en régime permanent pour bien filtrer les fluctuations du nombre de faux plots à chaque tour d'antenne mais il doit être élevé au moment de l'initialisation ou quand il y a un changement brutal de l'environnement radar de manière à améliorer la réponse transitoire. La détermination du gain $\mu$ est de préférence basée sur un filtrage de KALMAN adaptatif simplifié.

Une troisième opération 78 au niveau de la cellule consiste à calculer le nombre moyen $z_i$ de faux plots acceptés en aval de la régulation, ce calcul dépendant du fait que $m = \Sigma m_i$ est inférieur à s ou égal ou supérieur à s. Ainsi, dans le cas où $m < s$, les m plots sont transmis tandis que dans le cas contraire, seul un certain nombre $z_i$ sont transmis.

La valeur optimale de $z_i$ est obtenue en cherchant l'extremum de la fonction :

$$H = P + \beta(s-z)$$

$$\text{soit } H = \Sigma P_i + \beta(s-\Sigma z_i)$$

avec $z_i = m_i u_i$ et $\beta$ le coefficient multiplicateur de Lagrange.

L'optimum est atteint pour $dH/du_i = 0$

$$\text{soit pour } dP_i/du_1 - \beta m_i = 0$$

$$\text{avec } \Sigma z_i = s.$$

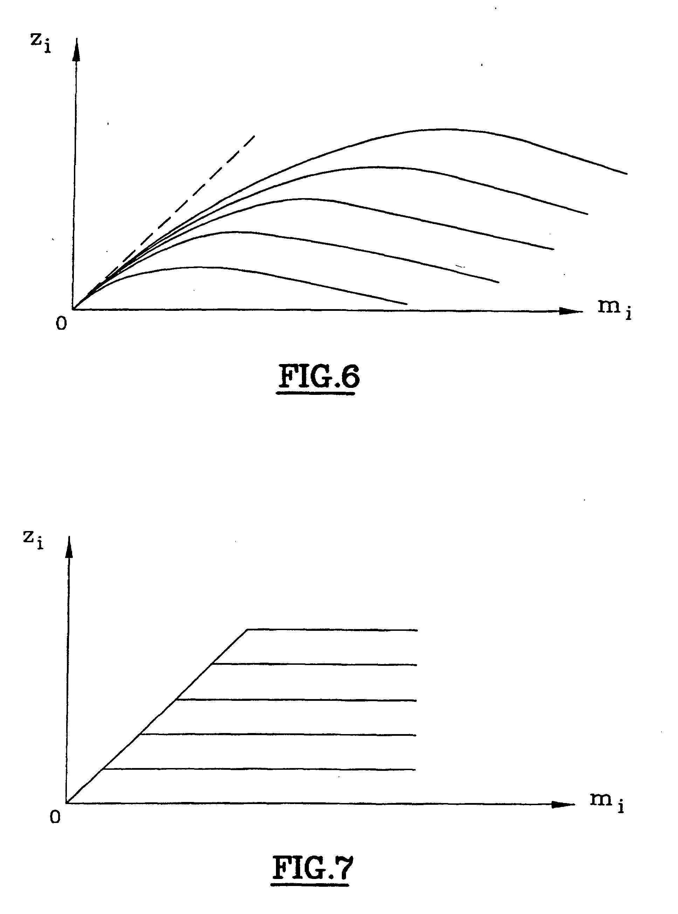

Les solutions possibles à ce système d'équations correspondent à une famille de courbes (Figure 6) $z_i = f_v(mi)$ à un paramètre v qui est relié au multiplicateur de Lagrange $\beta$. Ainsi, pour une valeur donnée de s, le nombre $z_i$ de faux plots acceptés en fonction de $m_i$ est déterminé par une seule courbe dont le paramètre v est déterminé par la relation :

$$\Sigma z_i = s$$

Dans une variante de l'invention, il est possible de se contenter d'une même limite pour toutes les cellules azimut-distance et dans ce cas (figure 7)

si m = ≤ s, tous les faux plots sont acceptés, $z_i = m_i$

si m > s, $z_i = m_i$ pour $m_i < v$

    $z_i = v$ pour $m_i \geq v$

v étant tel que $\Sigma z_i = s$.

Le calcul du paramètre de régulation v est effectué par l'opération 86 à l'aide des valeurs de z, m et s pour que la relation z = s soit vérifiée. L'évolution de la valeur v à chaque tour d'antenne est asservie à la différence (z-s) du tour d'antenne actuel. Le calcul est analogue à une recherche de la racine de l'équation z(v)-s=0 par un processus itératif, l'itération étant effectuée à chaque tour d'antenne.

Une quatrième opération 80 consiste à mettre à jour la valeur $R_i$ de risque qui est défini à partir du risque au tour précédent en effectuant une correction fonction de la différence entre le nombre de faux plots $y_i$ et le nombre moyen $z_i$.

En utilisant un risque régularisé et normalisé $R_i$ aussi voisin que possible de la probabilité $u_i$, la valeur $R_{iq}$ du risque au tour d'antenne q est donnée par un filtrage défini par la relation :

$$R_{iq} = R_{i(q-1)} + \alpha(z_i-y_i)/m_i$$

Le gain $\alpha$ est mis à jour (rectangle 88) à chaque tour d'antenne en fonction du gain $\alpha_{q-1}$ du tour d'antenne précédent et de l'écart (z-s) au tour d'antenne actuel. Ce gain $\alpha$ doit être faible en régime permanent et élevé en régime transitoire et peut être obtenu par un filtrage de KALMAN adaptatif simplifié.

Les valeurs x, y, z et m pour chaque tour d'antenne sont calculées par l'opération de sommation 82.

La description qui vient d'être faite de l'invention définit un procédé de régulation de plots à traiter qui comprend les étapes suivantes :

    (a) affecter à chaque plot une valeur $r_i$ du risque d'être un faux plot en fonction de tout ou partie des caractéristiques C dudit plot,

    (b) trier les plots pour transmettre au dispositif de pistage 22 les plots qui ont des coordonnées correspondant à des pistes établies,

    (c) déterminer une valeur $R_i$ de régulation qui correspond à un risque acceptable que le plot soit un faux plot,

    (d) comparer les valeurs $r_i$ de risque des plots non transmis à une valeur $R_i$ de régulation correspondant à un risque acceptable d'être un faux plot, et

    (e) transmettre au dispositif de pistage 22 les plots qui ont une valeur $r_i$ du risque inférieure ou égale à ladite valeur $R_i$ de régulation.

Pour affecter à chaque plot une valeur $r_i$ du risque d'être un faux plot en fonction des caractéristiques C d'un plot (étape (a)), l'invention prévoit l'enregistrement d'une mémoire 56 pour contenir des tables de correspondance entre C et $r_i$, le contenu de cette mémoire étant obtenu par les étapes suivantes :

    ($a_1$) enregistrer dans une mémoire 58 les coordonnées et les caractéristiques C des plots réels et/ou simulés relatifs à un grand nombre de tours d'antenne du radar,

    ($a_2$) analyser l'historique des plots contenus dans la mémoire 58 pour déterminer si un plot est vrai ou faux et le marquer en conséquence,

    ($a_3$) analyser statistiquement les caractéristiques C des plots marqués,

    ($a_4$) calculer les lois de risque qui lient tout ou partie des caractéristiques C des plots à des valeurs de risque $r_i$, et

    ($a_5$) enregistrer dans la mémoire 58 les valeurs $r_i$ de risque pour les différentes valeurs des caractéristiques C.

**Revendications**

1. Système de régulation du nombre de plots à traiter par un dispositif de pistage (22) des plots d'un radar qui est connecté entre un dispositif (18) pour extraire à chaque tour d'antenne du radar les coordonnées des plots ainsi que leurs caractéristiques et un dispositif (22, 24) pour visualiser les plots successifs extraits au cours de plusieurs tours d'antenne du radar, ledit système de régulation tant **caractérisé en ce qu'**il comprend :

   - un dispositif de calcul de la valeur ($r_i$) du risque d'être un faux plot de chaque plot (30) selon une loi de risque déterminée qui est une fonction des caractéristiques du plot considéré, et
   - un dispositif de filtrage (32, 34) des plots pour transmettre au dispositif de pistage les plots correspondant à des pistes établies au cours des précédents tours d'antenne du radar, ainsi que des nouveaux plots dont la valeur ($r_i$) du risque d'être un faux plot, est inférieure ou égale à une valeur de régulation ($R_i$) correspondant à un risque acceptable d'être un faux plot.

2. Système de régulation selon la revendication 1, **caractérisé en ce que** le dispositif de calcul du risque (30) de chaque plot comprend au moins une table de correspondance qui fait correspondre une valeur de risque ($r_i$) d'être un faux plot à chaque combinaison (C) de caractéristiques dudit plot.

3. Système de régulation selon la revendication 1 ou 2, **caractérisé en ce que** le dispositif de filtrage (32) comprend un premier filtre (36) pour transmettre les plots qui correspondent à des pistes établies au cours des précédents tours d'antenne et un deuxième filtre (38, 34) pour transmettre les plots qui ne correspondent pas à des pistes établies mais qui ont une valeur de risque ($r_i$) d'être un faux plot inférieure ou égale à une valeur ($R_i$) fournie par un dispositif de régulation (34).

4. Système de régulation selon la revendication 3, **caractérisé en ce que** le premier filtre (30) est un comparateur qui compare les coordonnées de chaque plot aux coordonnées d'une fenêtre associée au plot précédent de la même piste de manière à transmettre le plot lorsque ses coordonnées sont dans la fenêtre du plot précédent.

5. Système de régulation selon la revendication 3 ou 4, **caractérisé en ce que** le deuxième filtre (38) comprend un dispositif de régulation (34) pour déterminer la valeur ($R_i$) du risque acceptable et un comparateur pour comparer la valeur ($r_i$) du risque d'être un faux plot à la valeur ($R_i$) du risque acceptable de manière à transmettre au dispositif de pistage (22) les plots qui ont une valeur ($r_i$) du risque qui est inférieure ou égale à la valeur ($R_i$) du risque acceptable.

6. Procédé de régulation du nombre de plots à traiter par un dispositif de pistage (22) des plots d'un radar, lesdits plots étant définis par leurs coordonnées par rapport à l'antenne du radar et par une pluralité de caractéristiques (C) **caractérisé en ce qu'**il comprend les étapes suivantes :

(a) affecter (30) à chaque plot une valeur ($r_i$) du risque d'être un faux plot en fonction de tout ou partie des caractéristiques (C) dudit plot,
(b) trier (36) les plots pour transmettre au dispositif de pistage (22) les plots qui ont des coordonnées correspondant à des pistes établies,
(c) déterminer (34) une valeur ($R_i$) de régulation qui correspond à un risque acceptable que le plot soit un faux plot.
(d) comparer (38) les valeurs ($r_i$) de risque des plots non transmis à la valeur ($R_i$) de régulation correspondant à un risque acceptable d'être un faux plot, et
(e) transmettre au dispositif de pistage (22) les plots qui ont une valeur ($r_i$) du risque inférieure ou égale à ladite valeur ($R_i$) de régulation.

7. Procédé selon la revendication 6, **caractérisé en ce que** l'étape (a) consiste à lire une mémoire (56) contenant au moins une table de correspondance entre le code (C) et une valeur ($r_i$) du risque.

8. Procédé de régulation selon la revendication 7, **caractérisé en ce que** l'enregistrement du contenu de la mémoire (56) est obtenu par les étapes suivantes :

($a_1$) enregistrer (58) dans une mémoire les coordonnées et les caractéristiques (C) des plots réels et/ou simulés relatifs à un grand nombre de tours d'antenne du radar,
($a_2$) analyser (48) l'historique des plots contenus dans la mémoire pour déterminer si un plot est vrai ou faux et le marquer en conséquence,
($a_3$) analyser statistiquement (50) les caractéristiques (C) des plots marqués,
($a_4$) calculer les lois de risque qui lient tout ou partie des caractéristiques (C) des plots à des valeurs de risque ($r_i$), et
($a_5$) enregistrer dans une mémoire (56) les valeurs ($r_i$) de risque pour les différentes valeurs des caractéristiques (C).

**Claims**

1. System for regulating the number of plots to be processed by a device (22) for tracking the plots of a radar which is connected between a device (18) for extracting at each revolution of the radar antenna the coordinates of the plots as well as their characteristics and a device (22, 24) for displaying the successive plots extracted in the course of several revolutions of the radar antenna, said regulating system being **characterized in that** it comprises,

- a device for calculating the value ($r_i$) of the risk of being a false plot of each plot (30) according to a determined law of risk which is a function of the characteristics of the relevant plot, and
- a device (32, 34) for filtering the plots so as to send the tracking device the plots corresponding to the tracks established in the course of the previous revolutions of the radar antenna as well as new plots whose value ($r_i$) of the risk of being a false plot is less than or equal to a regulating value ($R_i$) corresponding to an acceptable risk of being a false plot.

2. Regulating system according to Claim 1, **characterized in that** the device for calculating the risk (30) of each plot comprises at least one lookup table which matches a value of risk ($r_i$) of being a false plot with each combination (C) of characteristics of said plot.

3. Regulating system according to Claim 1 or 2, **characterized in that** the filtering device (32) comprises a first filter (36) for sending the plots which correspond to tracks established in the course of the previous antenna revolutions and a second filter (38, 34) for sending the plots which do not correspond to established tracks but which have a value of risk ($r_i$) of being a false plot less than or equal to a value ($R_i$) supplied by a regulating device (34).

**4.** Regulating system according to Claim 3, **characterized in that** the first filter (30) is a comparator which compares the coordinates of each plot with the coordinates of a window associated with the previous plot of the same track so as to send the plot when its coordinates are in the window of the previous plot.

**5.** Regulating system according to Claim 3 or 4, **characterized in that** the second filter (38) comprises a regulating device (34) for determining the value ($R_i$) of the acceptable risk and a comparator for comparing the value ($r_i$) of the risk of being a false plot with the value ($R_i$) of the acceptable risk so as to send the tracking device (22) the plots which have a value ($r_i$) of the risk which is less than or equal to the value ($R_i$) of the acceptable risk.

**6.** Method of regulating the number of plots to be processed by a device (22) for tracking the plots of a radar, the said plots being defined by their coordinates with respect to the antenna of the radar and by a plurality of characteristics (C), **characterized in that** it comprises the following steps:

(a) assigning (30) each plot a value ($r_i$) of the risk of being a false plot as a function of all or some of the characteristics (C) of the said plot,
(b) sorting (36) the plots so as to send the tracking device (22) the plots which have coordinates corresponding to established tracks,
(c) determining (34) a regulating value ($R_i$) which corresponds to an acceptable risk of the plot being a false plot,
(d) comparing (38) the values ($r_i$) of risk of the plots not sent with the regulating value ($R_i$) corresponding to an acceptable risk of being a false plot, and
(e) sending the tracking device (22) the plots which have a value ($r_i$) of the risk less than or equal to the said regulating value ($R_i$).

**7.** Method according to Claim 6, **characterized in that** step (a) consists in reading a memory (56) containing at least one lookup table for matching the code (C) with a value ($r_i$) of the risk.

**8.** Regulating method according to Claim 7, **characterized in that** the recording of the content of the memory (56) is achieved through the following steps:

($a_1$) recording (58) in a memory the coordinates and the characteristics (C) of the real and/or simulated plots relating to a large number of revolutions of the radar antenna,
($a_2$) analysing (48) the historical log of the plots contained in the memory so as to determine whether a plot is true or false and to label it accordingly,
($a_3$) statistically analysing (50) the characteristics (C) of the labelled plots,
($a_4$) calculating the risk laws which relate all or some of the characteristics (C) of the plots to risk values ($r_i$), and
($a_5$) recording in a memory (56) the values ($r_i$) of risk for the various values of the characteristics (C).

**Patentansprüche**

**1.** System zur Regulierung der Anzahl der durch eine Spurverfolgungsvorrichtung (22) zu bearbeitenden Flecken eines Radargeräts, wobei das System zwischen einer Vorrichtung (18) zur Extraktion der Koordinaten der Flecken sowie von deren Merkmalen bei jedem Umlauf der Radarantenne und einer Vorrichtung (22, 24) angeschlossen ist, die die aufeinanderfolgenden und während mehrerer Umläufe der Radarantenne entnommenen Flecken anzeigt, **dadurch gekennzeichnet, daß** das System aufweist:

- eine Vorrichtung (30) zur Berechnung des Werts ($r_i$) des Risikos für jeden Fleck, daß es sich um einen falschen Fleck handelt, gemäß einem bestimmten Risikogesetz, das von den Merkmalen des betreffenden Flecks abhängt,
- und eine Vorrichtung (32, 34) zur Filterung der Flekken, um an die Spurverfolgungsvorrichtung die Flecken entsprechend dem im Verlauf der vorausgegangenen Umläufe der Radarantenne ermittelten Spuren sowie neue Flecken zu übertragen, deren Risikowert ($r_i$), daß es sich um einen falschen Flecken handelt, kleiner/gleich einem Regulierungswert ($R_i$) ist, der einen tolerierbaren Risiko entspricht, daß es sich um einen falschen Fleck handelt.

**2.** Regulierungssystem nach Anspruch 1, **dadurch gekennzeichnet, daß** die Vorrichtung (30) zur Berechnung des Risikos jedes Flecks mindestens eine Korrespondenztabelle enthält, die einen Wert eines Risikos ($r_i$), daß es sich um einen falschen Fleck handelt, mit jeder Kombination (C) von Merkmalen dieses Flecks in Korrespondenz bringt.

**3.** Regulierungssystem nach Anspruch 1 oder 2, **dadurch gekennzeichnet, daß** die Filtervorrichtung (32) ein erstes Filter (36) zur Übertragung der Flekken, die während früheren Umläufen der Antenne erstellten Spuren entsprechen, und ein zweites Filter (38, 34) enthält, um die Flecken, die nicht einer der erstellten Spuren entsprechen, aber einen Risikowert ($r_i$), daß es sich um einen falschen Fleck handelt, kleiner/gleich einem Wert ($R_i$) besitzen, der von einer Regulierungsvorrichtung (34) geliefert wird.

4. Regulierungssystem nach Anspruch 3, **dadurch gekennzeichnet, daß** das erste Filter (30) ein Komparator ist, der die Koordinaten jedes Flecks mit den Koordinaten eines dem vorausgegangenen Fleck der gleichen Spur zugeordneten Fensters vergleicht und den Fleck überträgt, wenn seine Koordinaten sich in dem Fenster des vorausgegangenen Flecks befinden.

5. Regulierungssystem nach Anspruch 3 oder 4, **dadurch gekennzeichnet, daß** das zweite Filter (38) eine Regulierungsvorrichtung (34) zu Bestimmung des Werts ($R_i$) des tolerierbaren Risikos und einen Komparator zum Vergleich des Werts ($r_i$) des Risikos, daß es sich um einen falschen Fleck handelt, mit dem Wert ($R_i$) des tolerierbaren Risikos enthält, sodaß an die Spurverfolgungsvorrichtung (22) die Flecken übertragen werden, die einen Risikowert ($r_i$) besitzen, der kleiner oder höchstens gleich dem Wert ($R_i$) des tolerierbaren Risikos ist.

6. Verfahren zur Regulierung der Anzahl der durch eine Spurverfolgungsvorrichtung (22) zu bearbeitenden Flekken auf einem Radarschirm, wobei die Flecken durch ihre Koordinaten bezüglich der Antenne des Radargeräts und durch mehrere Merkmale (C) definiert sind, **dadurch gekennzeichnet, daß** es folgende Schritte enthält:

   a) Jedem Fleck wird ein Wert ($r_i$) des Risikos, daß es sich um einen falschen Fleck handelt, abhängig von allen oder einigen Merkmalen (C) des Flecks zugeordnet;
   b) die an die Spurverfolgungsvorrichtung (22) zu übertragenden Flecken werden aussortiert (36), um diejenigen Flecken zu übertragen, die Koordinaten entsprechend gesicherten Spuren entsprechen;
   c) ein Regulierungswert ($R_i$) wird bestimmt (34), der einem tolerierbaren Risiko entspricht, daß der Fleck ein falscher Fleck ist;
   d) die Risikowerte ($r_i$) der nicht übertragenen Flecken werden mit dem Regulierungswert ($R_i$) entsprechend einem tolerierbaren Risiko, daß es sich um einen falschen Fleck handelt, verglichen (38);
   e) an die Spurverfolgungsvorrichtung (22) werden die Flecken übertragen, die einen Risikowert ($r_i$) kleiner/gleich dem Regulierungswert ($R_i$) besitzen.

7. Verfahren nach Anspruch 6, **dadurch gekennzeichnet, daß** der Schritt (a) darin besteht, einen Speicher (56) auszulesen, der mindestens eine Tabelle der Korrespondenz zwischen dem Kode (C) und einem Risikowert ($r_i$) enthält.

8. Regulierungsverfahren nach Anspruch 7, **dadurch gekennzeichnet, daß** der Inhalt des Speichers (56) durch die folgenden Schritte erhalten wird:

   ($a_1$): In einen Speicher (58) werden die Koordinaten und Merkmale (C) der realen und/oder simulierten Flecken hinsichtlich einer großen Zahl von Umläufen der Radarantenne eingespeichert;
   ($a_2$): die zeitliche Entwicklung der in dem Speicher enthaltenen Flecken wird analysiert, um zu bestimmen, ob ein Fleck echt oder falsch ist, worauf er entsprechend markiert wird (48);
   ($a_3$): die Merkmale (C) der markierten Flecken werden statistisch analysiert (50);
   ($a_4$): die Risikogesetze werden berechnet, die alle oder einen Teil der Merkmale (C) der Flekken mit Risikowerten ($r_i$) verknüpfen;
   ($a_5$): die Risikowerte ($r_i$) werden für die verschiedenen Werte der Merkmale (C) in einem Speicher (56) gespeichert.

**FIG.1**

FIG.2

EP 0 778 470 B1

18 — EXTRACTEUR PLOTS

40 — PLOTS

ECHOS — 42

SIMULATION CIBLES — 44

SIMULATION EXTRACTEUR — 46

PLOTS — 54

58

MARQUAGE PLOTS — 48

50

52

FIG.3

ANALYSE

TABLES — 56

**FIG.4**

EP 0 778 470 B1

**FIG.5**

$z_i$

0

$m_i$

## FIG.6

$z_i$

0

$m_i$

## FIG.7